# EUROPEAN PATENT APPLICATION

(11) **EP 4 395 453 A1**
(43) Date of publication of application: **03.07.2024**
(21) Application number: 21954499.6
(22) Date of filing: 24.08.2021
(51) Int. Cl.: H04W 88/04, H04W 68/02, H04W 72/04, H04W 76/27, H04W 4/70

(54) **PAGING MESSAGE TRANSMISSION METHOD AND APPARATUS, AND DEVICE**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LU, Qianxi, Dongguan, Guangdong 523860 (CN); LI, Haitao, Dongguan, Guangdong 523860 (CN)
(74) Representative: Novagraaf Technologies
(86) International application number: PCT/CN2021/114389
(87) International publication number: WO 2023/023958

(57) **Abstract**

Embodiments of the present application provide a paging message transmission method and apparatus, and a device. The method comprises: a relay terminal monitors a paging message on at least one of a plurality of resources, the plurality of resources comprising resources used for monitoring paging messages and configured by a network device for terminal types involving a plurality of bandwidth capabilities.

## Description

### TECHNICAL FIELD

Embodiments of the present disclosure relates to the technical field of mobile communication, in particular to a paging message transmission method, an apparatus, and a device.

### BACKGROUND

The three application scenarios of the 5th Generation Mobile Communication Technology (5G) include enhanced mobile broadband (eMBB), massive machine type communication (mMTC), and ultra-reliable low-latency communication (uRLLC). With the evolution of the communication technology, industrial wireless sensors, video surveillance, wearable devices, and other terminal internet of things (IoT) applications have put forward new requirements for 5G terminals, such as lower complexity and cost, smaller size, and lower energy consumption. For this reason, a reduced capability UE (RedCap UE) is introduced in Release 17 (Rel-17) of the standardization process of the 3rd Generation Partnership Project (3GPP). Compared with an ordinary terminal, the RedCap UE has lower design complexity and less bandwidth capability. For example, a maximum bandwidth supported by the RedCap UE may be 10MHz or 5MHz, so that the RedCap UE has lower hardware cost and power consumption.

In a paging scenario of a sidelink relay technology, a relay user equipment (UE) may monitor a paging message on its own paging occasion (PO), and may also monitor a paging message on a PO of a remote UE, which the relay UE serves, for the remote UE. Then the relay UE may relay the received the paging message to the remote UE.

In practical applications, the RedCap UE with a low bandwidth capability cannot normally receive data transmitted in a resource with high bandwidth. Based on this, in the Sidelink relay technology with the introduction of the RedCap UE, there is no solution for the relay UE to monitor a paging message of the remote UE.

### SUMMARY

Embodiments of the present disclosure provide a paging message transmission method, an apparatus, and a device.

A paging message monitoring method is provided in the embodiments of the present disclosure and includes: monitoring, by a relay terminal, a paging message on at least one of multiple resources. The multiple resources include resources configured by a network device for terminal types with multiple bandwidth capabilities to monitor paging messages.

In some embodiments, the multiple resources are configured in a first initial downlink bandwidth part (BWP).

In some embodiments, the multiple resources are configured in a second initial downlink bandwidth part (BWP); the second initial downlink BWP is an initial downlink BWP configured by the network device for a terminal type with a second bandwidth capability; the second bandwidth capability represents a bandwidth capability of the relay terminal.

In some embodiments, the multiple resources are configured in multiple initial downlink bandwidth parts (BWPs), and each of the multiple resources corresponds to a respective initial downlink BWP of the multiple initial downlink BWPs.

In some embodiments, the monitoring, by a relay terminal, a paging message on at least one of multiple resources, includes: monitoring, by the relay terminal, a paging message on a first resource of the multiple resources. The first resource is a resource configured by the network device for a terminal type with a first bandwidth capability; the first bandwidth capability is a bandwidth capability less than or equal to a second bandwidth capability of multiple bandwidth capabilities; the second bandwidth capability represents a bandwidth capability of the relay terminal.

In some embodiments, the monitoring, by a relay terminal, a paging message on at least one of multiple resources, includes: monitoring, by the relay terminal, a paging message on a second resource and/or a paging message on a third resource of the multiple resources. The second resource is a resource configured by the network device for a terminal type with a second bandwidth capability; the second bandwidth capability represents a bandwidth capability of the relay terminal; the third resource is a resource configured by the network device for a terminal type with a third bandwidth capability; the third bandwidth capability represents a bandwidth capability of a remote terminal.

In some embodiments, the monitoring, by the relay terminal, a paging message on a second resource and/or a paging message on a third resource of the multiple resources, includes: monitoring, by the relay terminal, the paging message on the second resource and the paging message on the third resource, in response to the second bandwidth capability being greater than or equal to the third bandwidth capability; monitoring, by the relay terminal, the paging message on the second resource, in response to the second bandwidth capability being less than the third bandwidth capability.

In some embodiments, before monitoring, by the relay terminal, the paging message on a second resource and/or a paging message on a third resource of the multiple resources, the method further includes: receiving, by the relay terminal, auxiliary information transmitted by the remote terminal. The auxiliary information is configured to indicate the third resource.

In some embodiments, the auxiliary information includes at least one of: bandwidth capability information of the third bandwidth capability of the remote terminal; the third resource configured by the network device for the terminal type with the third bandwidth capability; and an initial downlink bandwidth part (BWP) configured by the network device for the terminal type of the third bandwidth capability.

In some embodiments, the method further includes transmitting, by the relay terminal, multiple pieces of indication information. The multiple pieces of indication information is configured to indicate whether the relay terminal is capable of providing a relay service for the terminal types with multiple bandwidth capabilities; each pieces of the multiple pieces of indication information corresponds to a terminal type with a respective bandwidth capability of the terminal types with multiple bandwidth capabilities.

In some embodiments, first indication information indicates that the relay terminal is capable of providing a relay service for a terminal type with a fourth bandwidth capability corresponding to the first indication information, in response to at least one of the following conditions being met: the relay terminal being capable of monitoring the paging message on a fourth resource; the fourth resource being a resource configured by the network device for the terminal type with the fourth bandwidth capability; and the network device having been configured the fourth resource for the terminal type with the fourth bandwidth capability, a second bandwidth capability of the relay terminal being greater than or equal to the fourth bandwidth capability. The first indication information is any one of the multiple pieces of indication information.

In some embodiments, the first indication information indicates that the relay terminal is incapable of providing the relay service for the terminal type with the fourth bandwidth capability corresponding to the first indication information, in response to any of the following conditions being met: the network device having not been configured a resource to a monitor the paging message for the terminal type with the fourth bandwidth capability; the relay terminal being incapable of monitoring the paging message on the fourth resource; the fourth resource being a resource configured by the network device for the terminal type with the fourth bandwidth capability; and the second bandwidth capability of the relay terminal being less than the fourth bandwidth capability. The first indication information is any one of the multiple pieces of indication information.

In some embodiments, the bandwidth capability represents a maximum bandwidth which a terminal is capable of supporting.

A paging message transmission method is provided in the embodiments of the present disclosure and includes: configuring, by a network device, multiple resources for terminal types with multiple bandwidth capabilities; and transmitting, by the network device, paging messages on the multiple resources. A terminal type with each of the multiple bandwidth capabilities corresponds to a respective resource of the multiple resources.

In some embodiments, the configuring, by a network device, multiple resources for terminal types with multiple bandwidth capabilities, includes: transmitting, by the network device, first configuration information. The first configuration information is configured to configure a first initial downlink bandwidth part (BWP), and is configured to configure multiple resources for the terminal types with multiple bandwidth capabilities in the first initial downlink BWP.

In some embodiments, the configuring, by a network device, multiple resources for terminal types with multiple bandwidth capabilities, includes: transmitting, by the network device, second configuration information. The second configuration information is configured to configure multiple initial downlink bandwidth parts (BWPs), and each of the multiple initial downlink BWPs corresponds to a terminal type with a respective bandwidth capability of the terminal types with multiple bandwidth capabilities; the second configuration information is also configured to configure the multiple resources in a second initial downlink BWP of the multiple initial downlink BWPs.

In some embodiments, the configuring, by a network device, multiple resources for terminal types with multiple bandwidth capabilities, includes: transmitting, by the network device, third configuration information configured to configure multiple initial downlink bandwidth parts (BWPs), and configuring a resource in each of the multiple initial downlink BWPs. Each of the multiple initial downlink BWPs corresponds to a terminal type with a respective bandwidth capability of the terminal types with multiple bandwidth capabilities.

In some embodiments, the bandwidth capability represents a maximum bandwidth which a terminal is capable of supporting.

A paging message receiving method is provided in the embodiments of the present disclosure and includes: receiving, by a remote terminal, a first paging message which a relay terminal transmits for the remote terminal. The first paging message is received by the relay terminal on a third resource; the third resource is a resource configured by a network device for a terminal type with a third bandwidth capability; the third bandwidth capability represents a bandwidth capability of the remote terminal; the third bandwidth capability is less than or equal to a second bandwidth capability of the relay terminal.

In some embodiments, before the receiving, by a remote terminal, a first paging message that a relay terminal transmits for the remote terminal, the method further includes: transmitting, by the remote terminal, auxiliary information to the relay terminal. The auxiliary information is configured to indicate the third resource.

In some embodiments, the auxiliary information includes at least one of: bandwidth capability information of the third bandwidth capability of the remote terminal; the third resource configured by the network device for the terminal type with the third bandwidth capability; and an initial downlink bandwidth part (BWP) configured by the network device for the terminal type with the third bandwidth capability.

In some embodiments, before the receiving, by a remote terminal, a first paging message which a relay terminal transmits for the remote terminal, the method further includes: receiving, by the remote terminal, indication information. The indication information is configured to indicate whether the relay terminal is capable of providing a relay service for the remote terminal.

In some embodiments, the bandwidth capability represents a maximum bandwidth which a terminal is capable of supporting.

A paging message monitoring apparatus is provided in the embodiments of the present disclosure and includes a first receiving unit configured to monitor a paging message on at least one of multiple resources. The multiple resources include resources configured by a network device for terminal types with multiple bandwidth capabilities to monitor paging messages.

A paging messages transmitting apparatus is provided in the embodiments of the present disclosure and includes a second transmission unit, configured to configure multiple resources for terminal types with multiple bandwidth capabilities, and configured to transmit paging messages on the multiple resources. Each of the multiple terminal types with bandwidth capabilities corresponds to a respective resource of the multiple resources.

A paging message receiving apparatus is provided in the embodiments of the present disclosure and includes a third receiving unit configured to receive a first paging message which a relay terminal transmits for a remote terminal. The first paging message is received by the relay terminal on a third resource; the third resource is a resource configured by a network device for a terminal type with a third bandwidth capability; the third bandwidth capability represents a bandwidth capability of the remote terminal; the third bandwidth capability is less than or equal to a second bandwidth capability of the relay terminal.

A terminal device provided in the embodiments of the present disclosure is the above relay terminal or remote terminal, and includes a processor and a memory. The memory is configured to store a computer program, and the processor is configured to call and run the computer program stored in the memory and perform any one of the above paging message monitoring methods and the above paging message receiving methods.

A network device provided in the embodiments of the present disclosure includes a processor and a memory. The memory is configured to store a computer program, and the processor is configured to call and run the computer program stored in the memory and perform any one of the paging message transmission methods.

A chip provided in the embodiments of the present disclosure includes a processor. The processor is configured to call and run a computer program from a memory, and enable a device including the chip to perform any one of the above methods.

A computer-readable storage medium provided in the embodiments of the present disclosure is configured to store a computer program. The computer program enables a computer to perform any one of the above methods.

A computer program product provided in the embodiments of the present disclosure and includes computer program instruction. The computer program instruction enables a computer to perform any one of the above methods.

A computer program provided in the embodiments of the present disclosure enables a computer to perform any one of the above methods in response to the computer program running on the computer.

In the above solutions, the network device configures different resources for terminal types with different bandwidth capabilities, and the relay terminal monitors paging messages on one or more resources configured for the terminal types with different bandwidth capabilities. In this way, the relay terminal relays the paging messages to the remote terminals with different bandwidth capabilities, so that the remote terminals may receive the paging messages normally, improving communication coverage.

### BRIEF DESCRIPTION OF THE DRAWINGS

The drawings described here are configured to further understand the present disclosure and form a part of the present disclosure. The embodiments and descriptions of the present disclosure are configured to explain the present disclosure, and do not constitute an improper limitation of the present disclosure.
FIG. 1 is a schematic diagram of an exemplary network architecture according to some embodiments of the present disclosure.
FIG. 2 is a flowchart 1 of a paging message transmission method according to some embodiments of the present disclosure.
FIG. 3 is a flowchart 2 of a paging message transmission method according to some embodiments of the present disclosure.
FIG. 4 is a flowchart 3 of a paging message transmission method according to some embodiments of the present disclosure.
FIG. 5 is a flowchart 4 of a paging message transmission method according to some embodiments of the present disclosure.
FIG. 6 is a structural schematic diagram of a paging message monitoring apparatus according to some embodiments of the present disclosure.
FIG. 7 is a structural schematic diagram of a paging message transmission apparatus according to some embodiments of the present disclosure.
FIG. 8 is a structural schematic diagram of a paging message receiving apparatus according to some embodiments of the present disclosure.
FIG. 9 is a structural schematic diagram of a communication device according to some embodiments of the present disclosure.
FIG. 10 is a structural schematic diagram of a chip according to some embodiments of the present disclosure.
FIG. 11 is a schematic block diagram of a communication system according to some embodiments of the present disclosure.

### DETAILED DESCRIPTION

The technical solutions in the embodiments of the present disclosure are described in conjunction with the drawings in the embodiments of the present disclosure. It is obvious that the described embodiments are only some embodiments of the present disclosure, but not all embodiments. Other embodiments acquired by those skilled in the art based on the embodiments in the present disclosure without the creative work are all within the scope of the present disclosure.

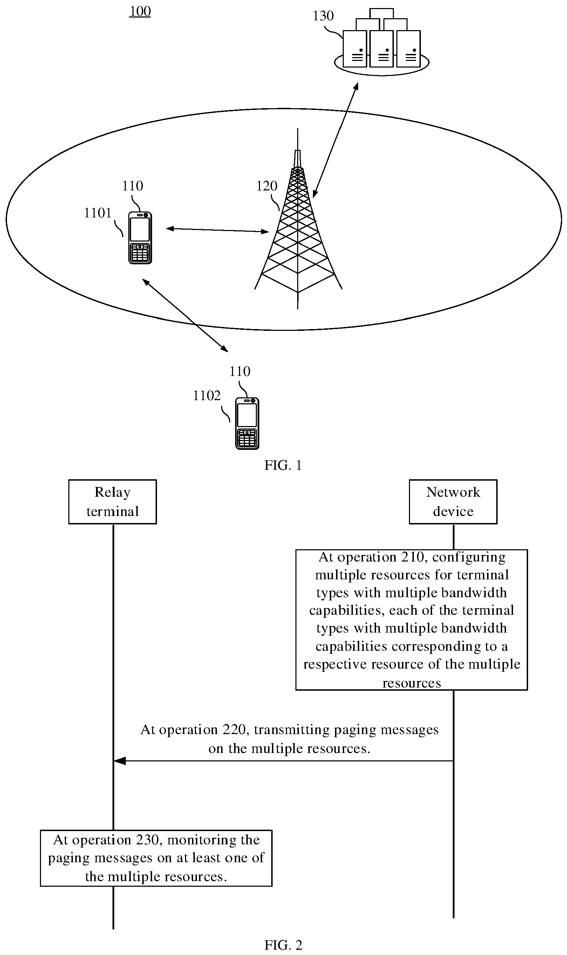

FIG. 1 is a schematic diagram of an exemplary network architecture according to some embodiments of the present disclosure.

As shown in FIG. 1, a communication system 100 may include a terminal 110 (such as a terminal 1101 and a terminal 1102) and a network device 120. The network device 120 may communicate with the terminal 1101 through an air interface. Multi-service transmission is supported between the terminal 1101 and the network device 120. The terminal 1101 may communicate with the terminal 1102 through a PC5 interface.

It should be understood that, some embodiments of the present disclosure are only illustrated by the communication system 100, but the embodiments of the present disclosure are not limited to this. That is, the technical solutions of the embodiments of the present disclosure may be applied to various communication systems, such as a Long Term Evolution (LTE) system, a LTE Time Division Duplex (TDD), a Universal Mobile Communication System (UMTS), an Internet of Things (IoT) system, a Narrow Band IoT (NB-IoT) system, an enhanced Machine Type Communications (eMTC) system, a 5G communication system (also known as a New Radio (NR) communication system), or a future communication system.

In the communication system 100 shown in FIG. 1, the network device 120 may be an access network device communicating with the terminal 1101. The access network device may provide communication coverage for a particular geographical area, and may communicate with the terminal 1101 (such as a UE) located in the coverage area.

The network device 120 may be an Evolutionary Node B (eNB or eNodeB) in a LTE system, a Next Generation Radio Access Network (NG RAN) device, a base station (gNB) in a NR system, a wireless controller in a Cloud Radio Access Network (CRAN), a relay station, an access point, an on-board device, a wearable device, a hub, a switch, a bridge, a router, or a network device in a Public Land Mobile Network (PLMN) in future evolution, etc.

The terminal 110 may be any terminal device, including but not limited to a terminal connected to the network device 120 or other terminal device in a wire or wireless manner.

For example, the terminal 110 (including the terminal 1101 and the terminal 1102) may be called an access terminal, a UE, a user unit, a user station, a mobile station, a remote station, a remote terminal, a mobile device, a user terminal, a terminal, a wireless communication device, a user agent, or user apparatus, etc. The access terminal may be a cellular phone, a cordless phone, a Session Initiation Protocol (SIP) phone, a IoT device, a satellite handheld terminal, a Wireless Local Loop (WLL) station, a Personal Digital Assistant (PDA), a handheld device with wireless communication functions, a computing device, other processing device connected to a wireless modem, an on-board device, a wearable device, a terminal device in a 5G network, or a terminal in future evolution network, etc.

The terminal 1101 and the terminal 1102 may be configured for communication of sidelink. In the wireless communication system 100 shown in FIG. 1, the terminal 1101 may be served as a Relay UE to provide a relay service for the terminal 1102 outside a coverage area by the network, so that the terminal 1102 outside the coverage area may access the network device 120, thereby extending coverage of the network and improving the performance of the communication system.

In addition, the wireless communication system 100 may also include a core network device 130 that communicates with the base station. The core network device 130 may be a 5G Core (5GC) device, such as an Access and Mobility Management Function (AMF), an Authentication Server Function (AUSF), a User Plane Function (UPF), a Session Management Function (SMF). In some embodiments, the core network device 130 may be an Evolved Packet Core (EPC) device of a LTE network, such as a Session Management Function + Core Packet Gateway (SMF+PGW-C) device. It should be understood that the SMF+PGW-C may implement functions that a SMF and Pa GW-C may implement. In a process of network evolution, the above core network device may also be called other names, or form a new network entity by dividing the functions of the core network, which is not limited.

All functional units in the communication system 100 may also establish a connection with each other through a next generation (NG) interface to implement communication.

For example, the terminal device establishes an air interface connection with the access network device through the NR interface to transmit user plane data and control plane signaling. The terminal device may establish a control-plane-signaling connection with an AMF through NG interface 1 (called N1). The access network device, such as the next generation wireless access base station (gNB), may establish a user-plane-data connection with an UPF through NG interface 3 (called N3). The access network device may establish a control-plane-signaling connection with the AMF through NG interface 2 (called N2). The UPF may establish a control-plane-signaling connection with the SMF through NG interface 4 (called N4). The UPF may interact user-plane-data with a data network through NG interface 6 (called N6). The AMF may establish a control-plane-signaling connection with the SMF through NG interface 11 (called N11). The SMF may establish a control-plane-signaling connection with a Policy Control Function (PCF) through a NG interface 7 (called N7).

FIG. 1 shows an example of a base station, a core network device, and two terminal devices. In some embodiments, the wireless communication system 100 may include multiple base stations and other number of terminal devices, which are not limited.

It should be noted that FIG. 1 only shows the system to which the present disclosure is applied in a form of an example. Methods shown in some embodiments of the present disclosure may also be applied to other systems. In addition, the terms "system" and "network" herein may be used interchangeably herein. The term "and/or" in the present disclosure is only an association relationship describing the associated objects, which means that there can be three kinds of relationships; for example, A and/or B can mean three situations including: A exists alone, A and B exist simultaneously, and B exists alone. In addition, the character "/" in the present disclosure generally indicates that associated objects before and after this character are in an "or" relationship. It should be understood that the "indication" mentioned in some embodiments of the present disclosure may be a direct indication, an indirect indication, or an association. For example, A indicating B may mean that A indicates B directly, for example, B may be obtained through A. A indicating B may mean that A indicates B indirectly, for example, A indicates C, and B may be obtained through C; A indicating B may also mean that there is an association between A and B. It should also be understood that the "corresponding" mentioned in some embodiments of the present disclosure may mean that there is a direct or indirect corresponding relationship between the two, or that there is an association between the two, or that there is a relationship between indicating and being indicated, or configuring and being configured. It should be understood that the "predefined" or "predefined rules" mentioned in some embodiments of the present disclosure may be implemented by pre-storing corresponding codes, tables or other methods that may be configured to indicate relevant information in a device (for example, including the terminal device and the network device), and the present disclosure does not limit a specific implementation method. For example, the "predefined" may indicate being defined in a protocol. It should be understood that, in some embodiments of the present disclosure, the "protocol" may include a standard protocol in the communication field, such as a LTE protocol, a NR protocol, and a related protocol applied to a future communication system, which is not limited.

To facilitate understanding the technical solutions of the embodiments of the present disclosure, the following describes related technologies of the embodiments of the present disclosure. As an optional solution, the following related technologies may be arbitrarily combined with the technical solutions of the embodiments of the present disclosure, which belong to the protection scope of the embodiments of the present disclosure.

The following describes application scenarios of a RedCap UE.

At present, the RedCap UE is mainly applied to three scenarios.
1. Industrial Wireless Sensors. Compared with a uRLLC, an industrial wireless sensor has relatively low requirements for latency and reliability, as well as low requirements for cost and power consumption. Main requirements and characteristics of the industrial wireless sensor includes: communication reliability being 99.99%, terminal-to-terminal latency<100ms, a reference data rate being less than 2Mbps and an uplink service being a main service, a static device, and a battery life being up to several years. In addition, for a wireless sensor relative to safety, the latency requirement is lower, such as 5-10ms.
2. Video surveillance. The video surveillance is mainly configured to monitor smart cities, and industrial factories, etc. Data collection and processing in smart cities may facilitate effective monitoring and control of urban resources and may provide more effective services for urban residents. The video surveillance is mainly for an uplink service, and other main requirements include: a reference rate of ordinary resolution video being 2~4Mbps, a latency being less than 500ms, and the communication reliability being 99%~99.9%. The rate requirement of high-definition video is 7.5~25Mbps.
3. Wearable device. The wearable device includes a smart watch, a smart bracelet, an electronic health device, and some medical monitoring devices, etc. One of the commonalities of these devices is small size devices. Key index requirements of the wearable device include: a downlink reference rate being 5~50Mbps and an uplink reference rate being 2~5Mbps; a downlink peak rate being 150Mbps and an uplink peak rate being 50Mbps; the battery being required to work for several days or even 1~2 weeks.

The following describes ways to reduce terminal complexity and cost.

In practical applications, the terminal capability requirements may be reduced from the following aspects to implement a low complexity and low cost RedCap UE.
1. Reducing a maximum working bandwidth supported by a terminal.

In order to enable the RedCap UE and an ordinary UE (i.e., a non-RedCap UE) to share a same synchronization signal and physical broadcast channel (PBCH) block (SSB), a control resource set 0 (CORESET0), and a system information block 1 (SIB1), a maximum bandwidth of the RedCap UE in a low-frequency band (i.e., FR1 band) may be reduced from 100MHz to 20MHz. In addtion, a maximum bandwidth of the RedCap UE in a high-frequency band (i.e., FR2 band) may be reduced to 100MHz.

2. Reducing the number of receiving antennas of a terminal.

In a frequency band where ordinary UEs are required to support at least two receiving antenna interfaces, a minimum number of receiving antennas supported by the RedCap UE is reduced to one or two.

In a frequency band where ordinary UEs are required to support at least four receiving antenna interfaces, a minimum number of receiving antennas supported by the RedCap UE is reduced to one or two.

3. Reducing the number of multiple-in multiple-out (MIMO) layers of a terminal.

For a RedCap UE with one receiving antenna, it supports one-layer of a downlink MIMO.

For RedCap UEs with two receiving antennas, it supports two-layer of a downlink MIMO.

4. Reducing a maximum modulation order.

The use of low modulation order may reduce requirements for processing capability of RF devices and baseband chips. The easing of the maximum modulation order mainly includes the following contents.

For the uplink (UL): the maximum modulation order corresponding to FR1 frequency band is reduced from 64 quadrature amplitude modulation (QAM) to 16 QAM; the maximum modulation order corresponding to FR2 band is reduced from 64 QAM to 16 QAM.

For the downlink (DL): the maximum modulation order corresponding to FR1 band is reduced from 256 QAM to 64 QAM; the maximum modulation order corresponding to FR2 band is reduced from 64 QAM to 16 QAM.

5. Half-duplex Frequency Division Duplexing (FDD).

Compared with a full-duplex FDD, the RedCap UE adopted the half-duplex FDD mode may transmit and receive on different frequencies at different times. In implementation, cheaper transceiver antenna switches and low-pass filters may be configured to replace expensive duplexers.

6. Easing processing duration of a terminal.

There is a certain processing duration from receiving a physical downlink shared channel (PDSCH) to transmitting an uplink hybrid automatic repeat request (HARQ) feedback information, and from receiving a physical downlink control channel (PDCCH) indicating the uplink scheduling to transmitting a physical uplink shared channel (PUSCH). The greater the processing capability of the terminal hardware is, the shorter the processing duration is. Easing the requirements for the processing duration of the terminal, that is, allowing a longer processing duration, may ease the requirements for the receiver processing module and reduce the terminal cost.

7. Reducing the maximum number of data radio bearers (DRBs) that the terminal is forced to support.

From the above three application scenarios supported by the RedCap, the terminal generally does not have multiple parallel services at the same time. In addition, the number of DRBs directly affects a size of a buffer and a memory of the terminal. Therefore, it may be considered to reduce the terminal cost by reducing the maximum number of DRBs supported by the terminal.

8. Reducing a size of a buffer on a data link layer (i.e., layer 2).

The size of the buffer on layer 2 mainly depends on the number of uplink peaks and downlink peaks, and a transmission time interval (RTT) of a Radio Link Control (RLC). Compared with an ordinary terminal, a peak rate supported by the RedCap UE is less than that of the ordinary UE. Correspondingly, the size of the buffer on the layer 2 may be reduced.

9. Reducing a RLC/Packet Data Convergence Protocol (PDCP) sequence number (SN) length.

The RLC/PDCP SN length is relative to a length of a sliding window that the RLC/PDCP layer is required to support. The RLC/PDCP SN length of an ordinary UE is required 18 bits. For the RedCap UE, the size of the buffer of the RedCap UE is less than that of the ordinary UE. Correspondingly, the RedCap UE may be reduced the RLC/PDCP SN length.

The following describes a NR Radio Resource Control (RRC) state and a paging mechanism.

5G network may has three RRC states: a RRC connected state (RRC_CONNECTED), a RRC idle state (RRC_IDLE), and a RRC inactive state (RRC_INACTIVE).

In the RRC_CONNECTED state, an RRC connection is established between a terminal and a Random Access Network (RAN) (i.e., a base station). The base station may store context information of an access layer (AS) of the terminal, and a RAN device may implement terminal mobility control in a cell-level.

In the RRC_IDLE state, a RRC connection is not established between the terminal and the RAN, and the RAN does not store the context information of the AS of the terminal. Correspondingly, in this state, a core network (CN) initiates paging to the terminal, and configures a paging area.

In the RRC_INACTIVE state, the terminal may move in an area configured by the RNA without notifying the RAN. In addition, a last base station serving the terminal stores the AS context information of the terminal. In this state, the RAN initiates the paging to the terminal, and configures the paging area.

In practical applications, a main function of the paging is that, when the terminal is in the RRC_IDLE state or the RRC_INACTIVE state, the network may page the terminal through the paging message, or the network may notify the terminal to change a system message or notify earthquake tsunami/public warning information through short message.

In some embodiments of the present disclosure, the terminal in the RRC_IDLE state or the RRC_INACTIVE state may monitor the paging on resources configured in an initial downlink bandwidth part (BWP). For 15kHz subcarrier interval, a maximum bandwidth configured in the initial downlink BWP is 20MHz, that is, a maximum bandwidth of a resource that the terminal may monitor a paging message is also 20MHz.

To further reduce the cost of the RedCap UE, the maximum bandwidth that RedCap UE may support may be further reduced to 10MHz or 5MHz. In this way, the RedCap UE with a low bandwidth capability cannot work normally on the initial downlink BWP of 20MHz, that is, the RedCap UE cannot receive a paging message normally. In some embodiments of the present disclosure, the network device may separately configure an initial downlink BWP bandwidth matched with a bandwidth capability of the RedCap UE for the RedCap UE, or separately configure a resource to monitor a paging message for the RedCap UE in the initial downlink BWP.

However, in a paging scenario of the Sidelink relay technology, in addition to monitoring its own paging message on a PO in the initial downlink BWP, the relay UE in a disconnected state is also required to monitor a paging message for a remote UE on a PO of the remote UE that the relay UE serves, and then relay the received paging message to the corresponding remote UE. When the remote UE is a RedCap UE with a low bandwidth capability, the Relay UE may fail to provide a relay service for the remote UE.

Based on the above problems, some embodiments of the present disclosure provide a paging message transmission method. Specifically, a network device may configure different resources for terminal types with different bandwidth capabilities, and a relay terminal may monitor paging messages on one or more resources configured for the terminal types with different bandwidth capabilities. In this way, the relay terminal may relay the paging messages to remote terminals with different bandwidth capabilities, so that the remote terminals may receive the paging messages normally, improving communication coverage.

In order to facilitate understanding the technical solutions of the embodiments of the present disclosure, the technical solutions are detailed below through some embodiments. As an optional solution, the above related technologies may be arbitrarily combined with the technical solutions of the embodiments of the present disclosure, which belong to the protection scope of the embodiments of the present disclosure.

FIG. 2 is a flowchart 1 of a paging message transmission method according to some embodiments of the present disclosure. As shown in FIG. 2, the method may be performed by a relay terminal, which may be the terminal 1101 shown in FIG. 1. The network device in the method may be the network device 120 shown in FIG. 1, and the remote terminal in the method may be the terminal 1102 shown in FIG. 1. The method may include following operations 210 to 230.

At operation 210, a network device configures multiple resources for terminal types with multiple bandwidth capabilities. Each of the terminal types with multiple bandwidth capabilities corresponds to a respective resource of the multiple resources.

At operation 220, the network device transmits paging messages on the multiple resources.

At operation 230, a relay terminal monitors the paging messages on at least one of the multiple resources. The multiple resources include resources configured by the network device for the terminal types with multiple bandwidth capabilities, and the resources are configured to monitor the paging messages.

In some embodiments, a resource mentioned in some embodiments of the present disclosure may be a control resource set (CORESET) or a search space. The search space may be a paging search space, and the CORESET may be a CORESET corresponding to the paging search space.

In some embodiments, the bandwidth capability represents a maximum bandwidth which a terminal is capable of supporting. For example, when the bandwidth capability of the relay terminal is 20MHz, the maximum bandwidth that the relay terminal is capable of supporting is 20MHz.

In some embodiments of the present disclosure, the network device may configure different resources for terminal types with different bandwidth capabilities, so as to facilitate transmitting the paging messages through the configured resources. For example, the network device may configure resource 1 for a terminal type with a bandwidth capability not less than 20MHz, and may configure resource 2 for a terminal type with a bandwidth capability less than 20MHz.

It should be noted that, on each resource, the network device may transmit a paging message of a terminal with a bandwidth capability corresponding to the each resource. For example, the network device may transmit a paging message of a terminal with a bandwidth capability not less than 20MHz on resource 1, and may transmit a paging message of a terminal with a bandwidth capability less than 20MHz on resource 1.

In other words, terminals with different bandwidth capabilities are configured different resources to transmit paging messages.

In some embodiments of the present disclosure, the relay terminal (i.e. Relay UE) may monitor the paging messages on at least one of the above multiple resources.

It should be noted that at least one of the above resources at least includes a resource, corresponding to the bandwidth capability of the relay terminal, configured by the network device for the relay terminal. In other words, the relay terminal may at least monitor its own paging message.

In addition, the relay terminal may also monitor paging messages on resources configured by the network device for terminal types with other bandwidth capabilities, and may relay the paging messages to remote terminals with bandwidth capabilities different from the bandwidth capability of the relay terminal. In this way, the relay terminal may relay the paging messages to the remote terminals with different bandwidth capabilities, so that the remote terminals may receive the paging messages normally and improve the communication coverage.

It should be understood that the relay terminal in some embodiments of the present disclosure may be in a disconnected state (i.e., a RRC_IDLE state or a RRC_INACTIVE state).

In some embodiments of the present disclosure, the network device may configure resources for terminal types with different bandwidth capabilities to monitor paging messages in a variety of different implementations. The three implementation methods are described in detail below.

### Implementation 1

In some embodiments, the network device may configure a same initial downlink BWP for terminal types with multiple bandwidth capabilities, and configure different resources for terminal types with different bandwidth capabilities in the initial downlink BWP.

Specifically, the network device may transmit first configuration information to the relay terminal. The first configuration information is configured to configure the first initial downlink BWP, and is configured to configure multiple resources for terminal types with multiple bandwidth capabilities in the first initial downlink BWP. Each of the multiple resources corresponds to a terminal type with a respective bandwidth capability of the terminal types with multiple bandwidth capabilities.

In other words, for terminal types with different bandwidth capabilities, the network device may configure different CORESETs/search spaces in an initial downlink BWP. That is, the multiple resources described in operations 210 to 230 are all configured in the same initial downlink BWP.

Based on this, the relay terminal may monitor the paging messages on at least one of the multiple resources in the first initial downlink BWP.

### Implementation 2

In some embodiments, the network device may configure different initial downlink BWPs for terminal types with different bandwidth capabilities, and each terminal type with a bandwidth capability corresponds to a respective initial downlink BWP. For example, the network device may configure an initial downlink BWP 1 for a terminal with a bandwidth capability not less than 20MHz, and configure an initial downlink BWP 2 for a terminal with a bandwidth capability less than 20MHz.

In some embodiments, the network device may configure multiple resources in each initial downlink BWP. The multiple resources configured in each initial downlink BWP may be configured to transmit a paging message of a terminal type with a bandwidth capability corresponding to the current initial downlink BWP, and may be configured to transmit a paging message of a terminal type with a bandwidth capability less than the bandwidth capability of the terminal type corresponding to the current initial downlink BWP.

For example, the network device may configure two resources in initial downlink BWP 1 of the above embodiments, i.e., resource 1 and resource 2. The network device may transmit a paging message on resource 1 in initial downlink BWP 1 for a terminal with a bandwidth capability not less than 20MHz, and may transmit a paging message on resource 2 in initial downlink BWP 1 for a terminal with a bandwidth capability less than 20MHz.

In some embodiments of the present disclosure, a bandwidth capability of the relay terminal is a second bandwidth capability. The network device may transmit second configuration information to the relay terminal. Specifically, the second configuration information is configured to configure multiple initial downlink BWPs, and each of the multiple initial downlink BWPs corresponds to a terminal type with a respective bandwidth capability of the terminal types with multiple bandwidth capabilities.

The multiple initial downlink BWPs configured in the second configuration information include a second initial downlink BWP. The second initial downlink BWP is an initial downlink BWP configured by the network device for a terminal (i.e., the relay terminal) with the second bandwidth capability.

In some embodiments, the network device may configure multiple resources in the second initial downlink BWP through the second configuration information, so that the relay terminal may monitor its own paging message and the paging messages of terminal types with bandwidth capabilities less than the second bandwidth capability on the multiple resources in the second initial downlink BWP.

That is, the network device configures multiple resources in the second initial downlink BWP configured for the terminal type with the second bandwidth capability. That is, the multiple resources described in operations 210 to 230 are configured in the second initial downlink BWP.

Based on this, the relay terminal may monitor its own paging message and paging messages of remote terminals on the second initial downlink BWP matched with the second bandwidth capability of the relay terminal itself.

### Implementation 3

In some embodiments, since there are terminal types with different bandwidth capabilities, the network device may configure different initial downlink BWPs for terminal types with different bandwidth capabilities, and each of the terminal types with different bandwidth capabilities corresponds to an initial downlink BWP. For example, the network device may configure initial downlink BWP 1 for a terminal with a bandwidth capability not less than 20MHz, and may configure initial downlink BWP 2 for a terminal with a bandwidth capability less than 20MHz.

In addition, the network device configures a resource in each initial downlink BWP, and the resource in the each initial downlink BWP is configured to transmit a paging message of a terminal type with a bandwidth capability corresponding to the current initial downlink BWP.

For example, the network device may configure resource 1 in initial downlink BWP 1, and may configure resource 2 in initial downlink BWP 2. Resource 1 is configured to transmit a paging message of a terminal with a bandwidth capability not less than 20MHz, and resource 2 is configured to transmit a paging message of a terminal with a bandwidth capability less than 20MHz.

In some embodiments, the network device may transmit third configuration information to the relay terminal. The third configuration information is configured to configure multiple initial downlink BWPs and is configured to configure a resource in each of the multiple initial downlink BWPs. Each of the multiple initial downlink BWPs corresponds to a terminal type with a respective bandwidth capability of the terminal types with multiple bandwidth capabilities.

It may be understood that the multiple resources described in operations 210 to 230 are configured in the multiple initial downlink BWPs, and each of the multiple resources corresponds to a respective initial downlink BWP of the multiple initial downlink BWPs.

Based on this, the relay terminal may monitor the paging messages on the resource configured in at least one of the multiple initial downlink BWPs.

In some embodiments, the network device may carry any one of the first configuration information, the second configuration information, and the third configuration information in a SIB, and implement the configuration of multiple resources through the above configuration information carried in the SIB. The SIB may be SIB1, SIB2, or other type of SIB, which is not limited.

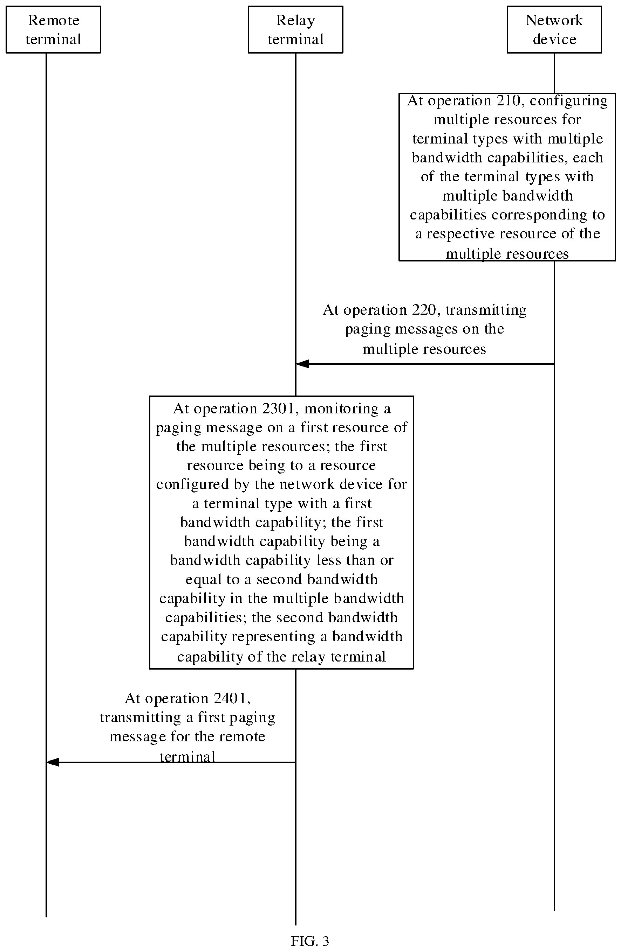

In some embodiments, as shown in a flowchart 2 of a paging message transmission method in FIG. 3, the relay terminal monitoring the paging messages on at least one of the multiple resources at operation 230 may be implemented through following operations.

At operation 2301, the relay terminal monitors a paging message on a first resource of the multiple resources.

The first resource is a resource configured by the network device for a terminal type with a first bandwidth capability. The first bandwidth capability is a bandwidth capability less than or equal to a second bandwidth capability in the multiple bandwidth capabilities. The second bandwidth capability represents a bandwidth capability of the relay terminal.

In some embodiments, the bandwidth capability represents a maximum bandwidth which a terminal is capable of supporting. The first bandwidth capability being less than or equal to the second bandwidth capability represents a maximum bandwidth indicated by the first bandwidth capability being less than or equal to a maximum bandwidth indicated by the second bandwidth capability.

In practical applications, a terminal with a large bandwidth capability may normally receive data transmitted on a resource with a small bandwidth, while a terminal with a small bandwidth capability cannot normally receive data transmitted on a resource with a large bandwidth. For example, a terminal supporting a maximum bandwidth of 20MHz may receive data transmitted on a resource with a bandwidth less than or equal to 20MHz, but cannot normally receive data transmitted on a resource with a bandwidth greater than 20MHz.

It may be understood that the relay terminal may monitor paging messages on resources corresponding to bandwidth capabilities less than or equal to the bandwidth capability of the relay terminal, that is, the relay terminal may monitor paging messages on all resources it supports.

In some embodiments of the present disclosure, the relay terminal may determine resources to be monitored based on the bandwidth capability (i.e. the second bandwidth capability) of the relay terminal. Specifically, the relay terminal may monitor its own paging message on the resource corresponding to the second bandwidth capability, and may also monitor paging messages on the resources corresponding to the bandwidth capabilities less than the second bandwidth capability, so as to provide a relay paging service for remote terminals it serves.

For example, the network device configures resource 1 for a terminal type with a bandwidth capability not less than 20MHz, and configures resource 2 for a terminal type with a bandwidth capability less than 20MHz. When a maximum bandwidth supported by the bandwidth capability of the relay terminal is not less than 20MHz, the relay terminal may monitor paging messages on resource 1 and resource 2 above. When the maximum bandwidth supported by the bandwidth capability of the relay terminal is less than 20MHz, the relay terminal only monitors a paging message on resource 2.

It should be noted that the first resource in some embodiments of the present disclosure may include resources configured by the network device for terminals with bandwidth capability less than or equal to the second bandwidth capability. In some embodiments, the first resource may include a resource configured by the network device for a remote terminal to monitor a paging message of the remote terminal. In some embodiments, the first resource may not include the resource configured by the network device for the remote terminal. Specifically, when the bandwidth capability of the remote terminal is less than or equal to the second bandwidth capability, the first resource may include the resource configured to monitor the paging message of the remote terminal. When the bandwidth capability of the remote terminal is greater than the second bandwidth capability, the first resource does not include the resource configured to monitor the paging message of the remote terminal.

It may be seen that, in the paging message transmission method according to some embodiments of the present disclosure, the network device may configure different resources for terminal types with different bandwidth capabilities. In this way, the relay terminal may determine to monitor paging messages on resources corresponding to bandwidth capabilities less than or equal to its own bandwidth capability based on its own bandwidth capability. Therefore, the relay terminal may relay the paging messages to the remote terminal with the low bandwidth capability (that is, the bandwidth capability is the same as or less than the bandwidth capability of the relay terminal), so that the remote terminal may receive the paging messages normally, improving the communication coverage.

In some embodiments, the bandwidth capability of the remote terminal is a third bandwidth capability.

In some embodiments, as shown in the flowchart 2 of the paging message transmission method in FIG. 3, when the third bandwidth capability of the remote terminal is less than or equal to the second bandwidth capability of the relay terminal, the relay terminal monitors a first paging message of the remote terminal on the third resource configured for the remote terminal. After the relay terminal monitors the first paging message of the remote terminal on the third resource, the relay terminal may also perform the following operations.

At operation 2401, the relay terminal transmits the first paging message to the remote terminal.

In other words, the relay terminal may not only monitor its own paging message, but also monitor the paging message of the remote terminal on the third resource to provide a relay paging service for the remote terminal. In this way, the communication performance of the remote terminal and the coverage of the communication system may be improved.

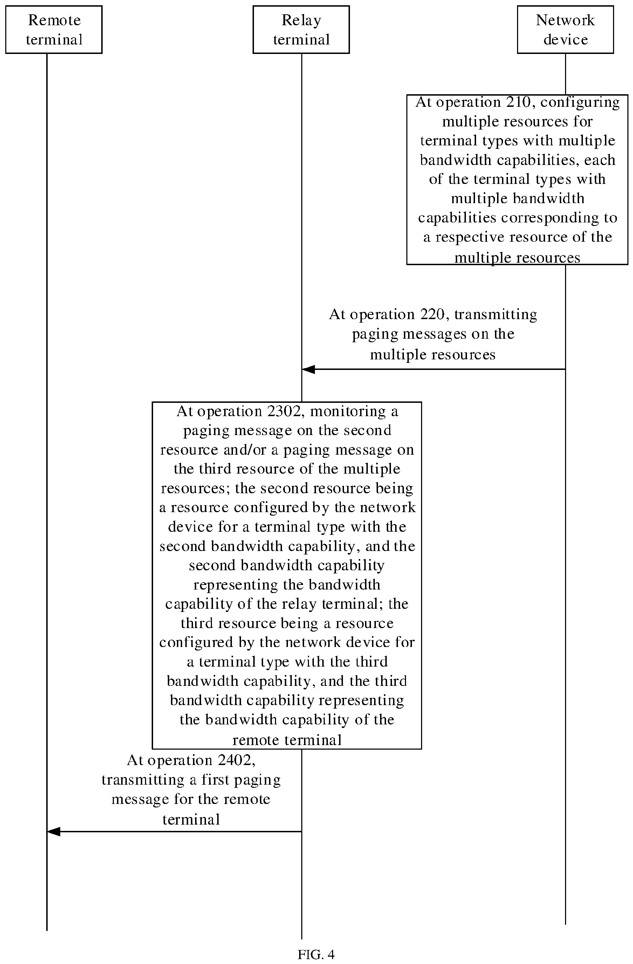

In another some embodiments, as shown in a flowchart 3 of a paging message transmission method in FIG. 4, the relay terminal monitoring the paging message on at least one of the multiple resources at operation 230 may be implemented through following operations.

At operation 2302, the relay terminal monitors a paging message on the second resource and/or the third resource of the multiple resources.

The second resource is a resource configured by the network device for a terminal type with the second bandwidth capability, and the second bandwidth capability represents the bandwidth capability of the relay terminal. The third resource is a resource configured by the network device for a terminal type with the third bandwidth capability, and the third bandwidth capability represents the bandwidth capability of the remote terminal.

In some embodiments of the present disclosure, the relay terminal may monitor its own paging message on the second resource corresponding to bandwidth capability (i.e., the second bandwidth capability) of the relay terminal, or may monitor its own paging message on the second resource while monitoring the paging message of the remote terminal on the third resource.

Specifically, the relay terminal may determine the resources to be monitored based on its own bandwidth capability and the bandwidth capability of the remote terminal.

In some embodiments, when the second bandwidth capability is greater than or equal to the third bandwidth capability, the relay terminal monitors the paging messages on the second resource and the third resource.

In another some embodiments, when the second bandwidth capability is less than the third bandwidth capability, the relay terminal monitors the paging message on the second resource.

In some embodiments, the bandwidth capability represents a maximum bandwidth which a terminal is capable of supporting. A terminal with a large bandwidth capability may normally receive data transmitted on a resource with a small bandwidth, while a terminal with a small bandwidth capability cannot normally receive data transmitted on a resource with a large bandwidth. For example, a terminal supporting a maximum bandwidth of 20MHz may receive data transmitted on a resource with a bandwidth less than or equal to 20MHz, but cannot normally receive data transmitted on resources with a bandwidth greater than 20MHz.

Based on this, in a case where the second bandwidth capability is greater than or equal to the third bandwidth capability, the relay terminal may monitor its own paging message on the second resource corresponding to the second bandwidth capability, in addition, the relay terminal may also monitor the paging message of the remote terminal on the third resource corresponding to the third bandwidth capability. In a case where the second bandwidth capability is less than the third bandwidth capability, the relay terminal cannot normally receive the data transmitted on the third resource. Therefore, the relay terminal only monitors its own paging message on the second resource.

In some embodiments, as show in a flowchart 3 of a paging message transmission method in FIG. 4, when the third bandwidth capability of the remote terminal is less than or equal to the second bandwidth capability of the relay terminal, the relay terminal monitors the first paging message of the remote terminal on the third resource configured for the remote terminal. After the relay terminal monitors the first paging message of the remote terminal on the third resource, the relay terminal may also perform the following operations.

At operation 2402, the relay terminal transmits the first paging message to the remote terminal.

In other words, the relay terminal may not only monitor its own paging message, but also may monitor the paging message of the remote terminal on the third resource to provide a relay the paging service for the remote terminal. In this way, the communication performance of the remote terminal and the coverage of the communication system may be improved.

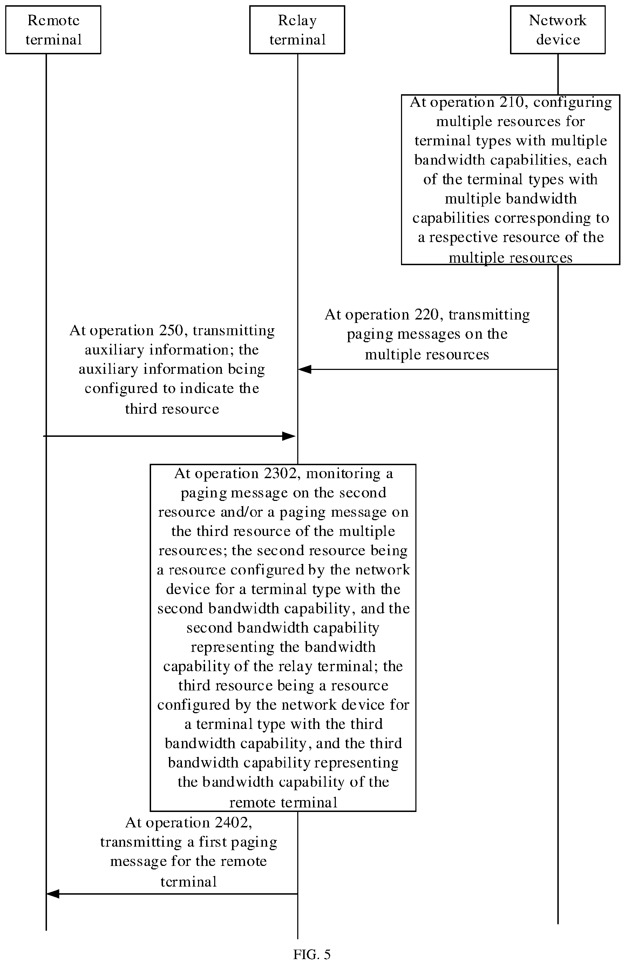

In some embodiments, as shown in a flowchart 4 of a paging message transmission method in FIG. 5, before the relay terminal monitors a paging message on the second resource and/or the third resource of the multiple resources at operation 2302, the method may also include following operations.

At operation 250, the relay terminal receives auxiliary information transmitted by the remote terminal. The auxiliary information is configured to indicate the third resource.

It may be understood that the remote terminal may transmit the auxiliary information to the relay terminal in advance, and may tell the relay terminal the third resource, which is configured to transmit the remote terminal's paging message, through the auxiliary information. In this way, the relay terminal determines the resource to be monitored based on the auxiliary information.

In some embodiments, the remote terminal may transmit the auxiliary information to the relay terminal through a PC5 interface.

In some embodiments, the above auxiliary information includes at least one of the following information:
bandwidth capability information of the third bandwidth capability of the remote terminal;
the third resource configured by the network device for the terminal type with the third bandwidth capability; and
the initial downlink BWP configured by the network device for the terminal type with the third bandwidth capability.

In some embodiments, the network device may configure different resources for terminals with different bandwidth capabilities to monitor corresponding paging messages. Based on this, the remote terminal may indicate the third bandwidth capability of the remote terminal through the auxiliary information carrying the bandwidth capability information of the remote terminal. Further, the relay terminal may determine the third resource corresponding to the third bandwidth capability in the auxiliary information based on a preset mapping relationship.

In some embodiments, the auxiliary information of the remote terminal may carry information relative to the third resource configured by the network device for the terminal type with the third bandwidth capability. In this way, the relay terminal may directly determine the third resource based on the auxiliary information.

In some embodiments, the network device may configure different initial downlink BWPs for terminals with different bandwidth capabilities, the network device may configure a resource in each initial downlink BWP, and the resource is configured to transmit paging information of a terminal with a corresponding bandwidth capability. Based on this, the auxiliary information of the remote terminal may carry the information relative to the initial downlink BWP configured by the network device for the remote terminal. In this way, based on a preset rule, the relay terminal may determine the resource corresponding to the initial downlink BWP, configured to transmit the paging message in the auxiliary information, so as to determine the above third resource.

It may be seen that, in the paging message transmission method according to some embodiments of the present disclosure, the remote terminal may transmit the auxiliary information to the relay terminal in advance to tell the relay terminal on which resource the paging message of the remote terminal may be monitored. In this way, the relay terminal may determine the resource to be monitored based on the auxiliary information, thereby improving an efficiency of the relay service.

In some embodiments, the relay terminal may also perform the following operations.

The relay terminal transmits multiple pieces of indication information. The multiple pieces of indication information are configured to indicates whether the relay terminal is capable of providing a relay service for terminal types with multiple pieces of bandwidth capabilities. Each of the multiple pieces of indication information corresponds to a terminal type with a respective bandwidth capability of the terminal types with multiple bandwidth capabilities.

It may be understood that the relay terminal may respectively transmit indication information to terminals with different bandwidth capabilities, and indicates whether the relay terminal is capable of providing a relay service for a terminal with the current bandwidth capability. For example, when there are terminal types with two bandwidth capabilities in a current network, one is terminal type 1 supporting a maximum bandwidth not less than 20MHz, and the other is terminal type 2 supporting a maximum bandwidth less than 20MHz. The relay terminal may transmit two pieces of indication information (i.e., indication information 1 and indication information 2). The relay terminal indicates whether the relay terminal is capable of providing a relay service for terminal type 1 through indication information 1, and the relay terminal indicates whether the relay terminal is capable of providing a relay service for terminal type 2 through indication information 2.

In some embodiments, the relay terminal may transmit the above multiple pieces of indication information by broadcast or multicast.

In some embodiments, the above indication information may be carried in a discovery message and transmitted, or the above indication information may be transmitted through special signaling, which is not limited.

In some embodiments, the relay terminal may determine content of the above multiple pieces of indication information based on its own bandwidth capability and/or resources configured to monitor the paging messages by itself.

Next, how the relay terminal determines the indication content in the indication information is described by taking the first indication information of the multiple pieces of indication information as an example. The first indication information is any one of the multiple pieces of indication information, and the first indication information in some embodiments of the present disclosure is configured to indicate whether the relay terminal is capable of providing a relay service for a terminal type with a fourth bandwidth capability. It may be understood that the first indication information corresponds to the terminal type with the fourth bandwidth capability.

It should be noted that the fourth bandwidth capability is only configured to distinguish from the first bandwidth capability, the second bandwidth capability, and the third bandwidth capability, and is not configured to limit a specific bandwidth capability.

In some embodiments, the relay terminal indicates that the relay terminal is capable of providing a relay service for the terminal type with the fourth bandwidth capability through the first indication information when at least one of the following conditions is met:
the relay terminal being capable of monitoring a paging message on a fourth resource;
the fourth resource being a resource configured by the network device for the terminal type with the fourth bandwidth capability; and
the network device having been configured a fourth resource for the terminal type with the fourth bandwidth capability, a second bandwidth capability of the relay terminal being greater than or equal to the fourth bandwidth capability.

That is, when the relay terminal is capable of monitoring the paging message on the fourth resource configured by the network device for the terminal type with the fourth bandwidth capability, and/or the network device has configured the fourth resource and the relay terminal's capability is capable of supporting the relay terminal to monitor the paging message on the fourth resource (that is, the relay terminal has a capability to monitor the paging message on the fourth resource), the relay terminal may transmit the first indication information, and notify the terminal with the fourth bandwidth capability that the relay terminal is capable of providing the relay service for the terminal through the first indication information.

In some embodiments, the relay terminal indicates that the relay terminal is incapable of providing a relay service for the terminal type with the fourth bandwidth capability through the first indication information when any of the following conditions is met:
the network device having not been configured a resource to a monitor the paging message for the terminal type with the fourth bandwidth capability;
the relay terminal being incapable of monitoring the paging message on the fourth resource; the fourth resource being a resource configured by the network device for the terminal type with the fourth bandwidth capability; and
the second bandwidth capability of the relay terminal being less than the fourth bandwidth capability.

That is, when the network device has not been configure the resource for the terminal type with the fourth bandwidth capability, or the network device has configured the fourth resource for the terminal type with the fourth bandwidth capability but the relay terminal does not monitor the paging message on the fourth resource, or the network device has configured the fourth resource for the terminal type with the fourth bandwidth capability, but the second bandwidth capability of the relay terminal does not support the relay terminal to monitor the paging message on the fourth resource (that is, the relay terminal does not have a capability to monitor the paging message on the fourth resource), the relay terminal may notify the terminal with the fourth bandwidth capability that the relay terminal is prohibited from providing a relay service for the terminal through the first indication information.

In some embodiments, the first indication information may be Barred indication information. The Barred indication information is boolean type of information. In response to the Barred indication information being true (for example, 1), it indicates that the relay terminal can provide the relay service for the terminal type with the fourth bandwidth capability. In response to the Barred indication information being false (for example, 0), it indicates that the relay terminal cannot provide the relay service for the terminal type with the fourth bandwidth capability.

It may be seen that, in the paging message transmission method according to some embodiments of the present disclosure, the relay terminal may transmit indication information to terminals with different bandwidth capabilities in advance to tell the terminals with different bandwidth capabilities whether the relay terminal is capable of providing a relay service for the terminals, thereby improving the efficiency of the relay services.

The above embodiments of the present disclosure are described in detail in combination with the accompanying drawings. However, the present disclosure is not limited to the specific details of the above embodiments. Within the scope of the technical concept of the present disclosure, a variety of simple modifications may be made to the technical solutions of the present disclosure, which all fall within the protection scope of the present disclosure. For example, technical features described in the above embodiments may be combined in any suitable way without contradiction. In order to avoid unnecessary repetition, various possible combination modes will not be described separately in the present disclosure. For another example, various different embodiments of the present disclosure may also be combined arbitrarily. As long as they do not violate the concept of the present disclosure, they should also be regarded as the content disclosed by the present disclosure. For another example, on the premise of no conflict, each embodiment and/or technical features in each embodiment described in the present disclosure may be arbitrarily combined with the related art, and the technical solution obtained after combination should also fall within the protection scope of the present disclosure.

It should also be understood that, in various method embodiments of the present disclosure, the size of the serial numbers of the above processes does not mean the sequence of performing, and the performing sequence of each process should be determined by its function and internal logic, and should not limit the implementation processes of the embodiments of the present disclosure. In addition, in some embodiments of the present disclosure, the terms "downlink", "uplink", and "sidelink" are configured to indicate the transmission direction of signals or data, "downlink" is configured to indicate that the transmission direction of signals or data is a first direction from a site to a UE of a cell, "Uplink" is configured to indicate that the transmission direction of the signal or data is the second direction from the UE of the cell to the site, and "side line" is configured to indicate that the transmission direction of the signals or data is the third direction from UE 1 to UE 2. For example, "downlink signal" indicates that the transmission direction of the signals is the first direction. In addition, in embodiments of the present disclosure, the term "and/or" in the present disclosure is only an association relationship describing the associated objects, which means that there can be three kinds of relationships; for example, A and/or B can mean three situations including: A exists alone, A and B exist simultaneously, and B exists alone. In addition, the character "/" in the present disclosure generally indicates that associated objects before and after this character are in an "or" relationship.

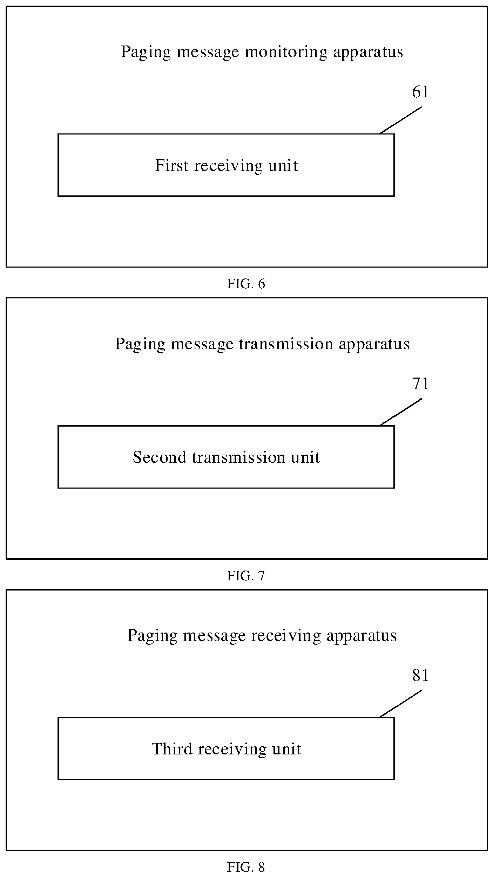

FIG. 6 is a structural schematic diagram of a paging message monitoring apparatus according to some embodiments of the present disclosure. The paging message monitoring apparatus may be applied in a relay terminal. As shown in FIG. 6, the paging message monitoring apparatus includes a first receiving unit 61.

The first receiving unit 61 is configured to monitor a paging message on at least one of multiple resources. The multiple resources include resource configured by a network device for terminal types with multiple bandwidth capabilities to monitor paging messages.

In some embodiments, the multiple resources are configured in a first initial downlink bandwidth part (BWP).

In some embodiments, the multiple resources are configured in a second initial downlink BWP; the second initial downlink BWP is an initial downlink BWP configured by the network device for a terminal type with a second bandwidth capability; the second bandwidth capability represents a bandwidth capability of the relay terminal.

In some embodiments, the multiple resources are configured in multiple initial downlink BWPs, and each of the multiple resources corresponds to a respective initial downlink BWP of the multiple initial downlink BWPs.

In some embodiments, the first receiving unit 61 is configured to monitor a paging message on a first resource of the multiple resources. The first resource is a resource configured by the network device for a terminal type with a first bandwidth capability; the first bandwidth capability is a bandwidth capability less than or equal to a second bandwidth capability in multiple bandwidth capabilities; the second bandwidth capability represents a bandwidth capability of the relay terminal.

In some embodiments, the first receiving unit 61 is configured to monitor a paging message on a second resource and/or a paging message on a third resource of the multiple resources. The second resource is a resource configured by the network device for a terminal type with a second bandwidth capability; the second bandwidth capability represents a bandwidth capability of the relay terminal; the third resource is a resource configured by the network device for a terminal type with a third bandwidth capability; the third bandwidth capability represents a bandwidth capability of a remote terminal.

In some embodiments, the first receiving unit 61 is configured to: monitor the paging message on the second resource and the paging message on the third resource, in response to the second bandwidth capability being greater than or equal to the third bandwidth capability; monitor the paging message on the second resource, in response to the second bandwidth capability being less than the third bandwidth capability.

In some embodiments, the first receiving unit 61 is configured to receive auxiliary information transmitted by the remote terminal. The auxiliary information is configured to indicate the third resource.

In some embodiments, the auxiliary information includes at least one of: bandwidth capability information of the third bandwidth capability of the remote terminal; the third resource configured by the network device for the terminal type with the third bandwidth capability; and an initial downlink BWP configured by the network device for the terminal type of the third bandwidth capability.

In some embodiments, the paging message monitoring apparatus includes a first transmission unit. The first transmission unit is configured to transmit multiple pieces of indication information. The multiple pieces of indication information are configured to indicate whether the relay terminal is capable of providing a relay service for the terminal types with multiple bandwidth capabilities; each piece of the multiple pieces of indication information corresponds to a terminal type with a respective bandwidth capability of the terminal types with multiple bandwidth capabilities.

In some embodiments, first indication information indicates that the relay terminal is capable of providing a relay service for a terminal type with a fourth bandwidth capability corresponding to the first indication information, in response to at least one of the following conditions being met: the relay terminal being capable of monitoring a paging message on a fourth resource; the fourth resource being a resource configured by the network device for the terminal type with the fourth bandwidth capability; and the network device having been configured the fourth resource for the terminal type with the fourth bandwidth capability, a second bandwidth capability of the relay terminal being greater than or equal to the fourth bandwidth capability. The first indication information is any one of the multiple pieces of indication information.

In some embodiments, the first indication information indicates that the relay terminal is incapable of providing the relay service for the terminal type with the fourth bandwidth capability corresponding to the first indication information, in response to any of the following conditions being met: the network device having not been configured a resource to a monitor the paging message for the terminal type with the fourth bandwidth capability; the relay terminal being incapable of monitoring the paging message on the fourth resource; the fourth resource being a resource configured by the network device for the terminal type with the fourth bandwidth capability; and the second bandwidth capability of the relay terminal being less than the fourth bandwidth capability. The first indication information is any one of the multiple pieces of indication information.

In some embodiments, the bandwidth capability represents a maximum bandwidth which a terminal is capable of supporting.

FIG. 7 is a structural schematic diagram of a paging message transmission apparatus according to some embodiments of the present disclosure. The paging message transmission apparatus may be applied in a network device. As shown in FIG. 7, the paging message transmission apparatus includes a second transmission unit 71.

The second transmission unit 71 is configured to configure multiple resources for terminal types with multiple bandwidth capabilities; and transmit paging messages on the multiple resources. Each of the terminal types with multiple bandwidth capabilities corresponds to a respective resource of the multiple resources.

In some embodiments, the second transmission unit 71 is configured to transmit first configuration information. The first configuration information is configured to configure a first initial downlink BWP, and is configured to configure multiple resources for the terminal types with multiple bandwidth capabilities in the first initial downlink BWP.

In some embodiments, the second transmission unit 71 is configured to transmit second configuration information. The second configuration information is configured to configure multiple initial downlink BWPs, and each of the multiple initial downlink BWPs corresponds to a terminal type with a respective with bandwidth capability of the terminal types with multiple bandwidth capabilities; the second configuration information is also configured to configure the multiple resources in a second initial downlink BWP of the multiple initial downlink BWPs.

In some embodiments, the second transmission unit 71 is configured to transmit third configuration information. The third configuration information is configured to configure multiple initial downlink BWPs, and configure a resource in each of the multiple initial downlink BWPs. Each of the multiple initial downlink BWPs corresponds to a terminal type with a respective bandwidth capability of the terminal types with multiple bandwidth capabilities.

In some embodiments, the bandwidth capability represents a maximum bandwidth which a terminal is capable of supporting.

Those skilled should understand that the description in the paging message transmission apparatus may refer to the description in the paging message transmission method to understand.

FIG. 8 is a structural schematic diagram of a paging message receiving apparatus according to some embodiments of the present disclosure. The paging message receiving apparatus may be applied in a remote terminal. As shown in FIG. 8, the paging message receiving apparatus includes a third receiving unit 81.

The third receiving unit 81 is configured to receive a first paging message which a relay terminal transmits for the remote terminal. The first paging message is received by the relay terminal on a third resource; the third resource is a resource configured by a network device for a terminal type with a third bandwidth capability; the third bandwidth capability represents a bandwidth capability of the remote terminal; the third bandwidth capability is less than or equal to a second bandwidth capability of the relay terminal.

In some embodiments, the paging message receiving apparatus includes a third transmission unit. The third transmission unit is configured to transmit auxiliary information to the relay terminal. The auxiliary information is configured to indicate the third resource.

In some embodiments, the auxiliary information includes at least one of: bandwidth capability information of the third bandwidth capability of the remote terminal; the third resource configured by the network device for the terminal type with the third bandwidth capability; and an initial downlink BWP configured by the network device for the terminal type with the third bandwidth capability.

In some embodiments, the third receiving unit 81 is configured to receive indication information. The indication information is configured to indicate whether the relay terminal is capable of providing a relay service for the remote terminal.

In some embodiments, the bandwidth capability represents a maximum bandwidth which a terminal is capable of supporting.

Those skilled should understand that the description in the paging message receiving apparatus may refer to the description in the paging message receiving method to understand.

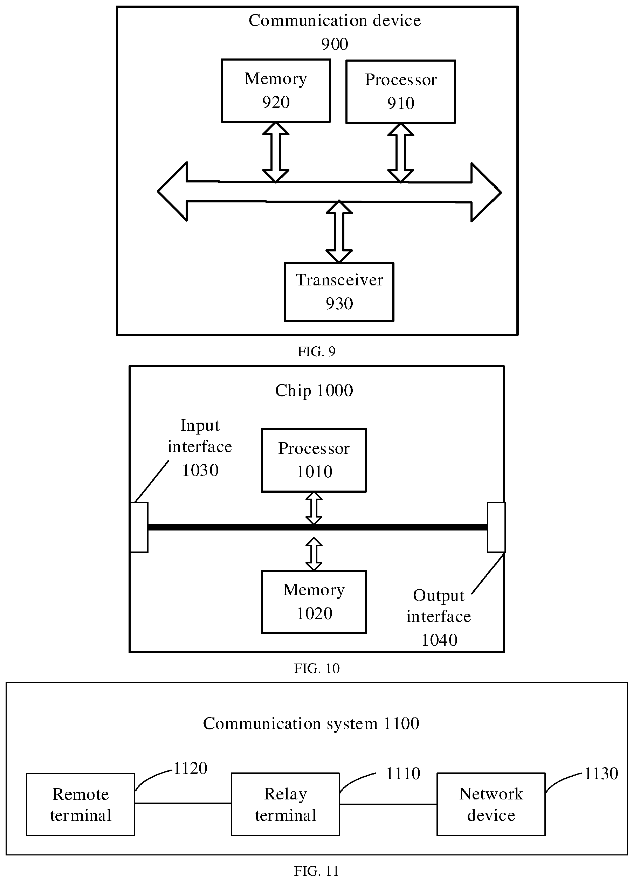

FIG. 9 is a structural schematic diagram of a communication device 900 according to some embodiments of the present disclosure. The communication device may be a terminal (that is, the relay terminal or the remote terminal provided in the present disclosure) or a network device. The communication device 900 shown in FIG. 9 includes a processor 910, which may call and run computer programs from a memory to implement the methods in the embodiments of the present disclosure.

In some embodiments, as shown in fig. 9, the communication device 900 may also include a memory 920. The processor 910 may call and run a computer program from the memory 920 to implement the methods in the embodiments of the present disclosure.

The memory 920 may be a separate component independent of the processor 910, or may be integrated in the processor 910.

In some embodiments, as shown in FIG. 9, the communication device 900 may also include a transceiver 930, and the processor 910 may control the transceiver 930 to communicate with other devices, specifically, the transceiver 930 may transmit information or data to other devices, or receive information or data transmitted by other devices.

The transceiver 930 may include a transmitter and a receiver. The transceiver 930 may further include antennas, and the number of the antennas may be one or more.

In some embodiments, the communication device 900 may be the network device of the embodiments of the present disclosure, and the communication device 900 may implement the corresponding processes implemented by the network device in the various methods of the embodiments of the present disclosure. For simplicity, the corresponding processes are not repeated here.

In some embodiments, the communication device 900 may be the relay terminal/remote terminal of the embodiments of the present disclosure, and the communication device 900 may implement the corresponding processes implemented by the relay terminal/remote terminal in the various methods of the embodiments of the present disclosure. For simplicity, the corresponding processes are not repeated here.

FIG. 10 is a structural schematic diagram of a chip according to some embodiments of the present disclosure. A chip 1000 shown in FIG. 10 includes a processor 1010, which may call and run a computer program from a memory to implement the methods in the embodiments of the present disclosure.

In some embodiments, as shown in FIG. 10, the chip 1000 may also include a memory 1020. The processor 1010 may call and run a computer program from the memory 1020 to implement the methods in the embodiments of the present disclosure.

The memory 1020 may be a separate component independent of the processor 1010, or may be integrated in the processor 1010.

In some embodiments, the chip 1000 may also include an input interface 1030. The processor 1010 may control the input interface 1030 to communicate with other devices or chips. In some embodiments, the input interface 1030 may obtain information or data transmitted by other devices or chips.

In some embodiments, the chip 1000 may also include an output interface 1040. The processor 1010 may control the output interface 1040 to communicate with other devices or chips. In some embodiments, the input interface 1030 may output information or data to other devices or chips.

In some embodiments, the chip may be applied to the network device in the embodiments of the present disclosure, and the chip may implement the corresponding processes implemented by the network device in the various methods of the embodiments of the present disclosure. For simplicity, the corresponding processes are not repeated here.

In some embodiments, the chip may be applied to the relay terminal/remote terminal in the embodiments of the present disclosure, and the chip may implement the corresponding flow implemented by the relay terminal/remote terminal in various methods of the embodiments of the present disclosure. For simplicity, the corresponding processes are not repeated here.

It should be understood that the chip mentioned in the embodiments of the present disclosure may also be called system-level chip, system chip, chip system, or a system chip on chip.

FIG. 11 is a schematic block diagram of a communication system 1100 according to some embodiments of the present disclosure. As shown in FIG. 11, the communication system 1100 includes a relay terminal 1110, a remote terminal 1120, and a network device 1130.

The relay terminal 1110 may be configured to implement the corresponding functions implemented by the relay terminal in the above methods, the remote terminal 1120 may be configured to implement the corresponding functions implemented by the remote terminal in the above methods, and the network device 1120 may be configured to implement the corresponding functions implemented by the network device in the above methods. For simplicity, the corresponding functions are not repeat here.

It should be understood that the processor in some embodiments of the present disclosure may be an integrated circuit chip with a signal processing capability. In a process of implement above method, each operation of the above method embodiments may be completed by an integrated logic circuit of a hardware in the processor or instructions in a form of software. The above processors may be general purpose processors, Digital Signal Processors (DSPs), Application Specific Integrated Circuits (ASICs), Field Programmable Gate Arrays (FPGAs) or other programmable logic components, discrete gates or transistor logic components, or discrete hardware components. Each method, operation and logic block diagram disclosed in some embodiments of the present disclosure may be implemented or performed. The general processor may be a microprocessor or the processor may also be any conventional processor, etc. The operations in combination with the methods in some embodiments of the present application may be directly performed by a hardware decoding processor or the combination of a hardware and a software module in the decoding processor. The software module may be located in a random access memory, a flash memory, a read-only memory, a programmable read-only memory, or an electrically erasable programmable memory, a register, or other mature storage medium in the field. The storage medium is located in a memory, and the processor reads information in the memory and completes the operations of the above methods in combination with the hardware.

It should be understood that the memory in some embodiments of the present disclosure may be a transitory memory and/or a non-transitory memory. The non-transitory memory may be a Read-Only Memory (ROM), a Programmable ROM (PROM), an Erasable PROM (EPROM), an Electrically erasable EPROM (EEPROM) or a flash memory. The transitory memory may be a Random Access Memory (RAM), which is configured as an external cache. By a way of illustration but not limitation, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchrolink DRAM (SLDRAM), and a Direct Rambus RAM (DR RAM). It should be noted that the memory of the systems and methods described herein is intended to include, but not limited to, these and any other suitable types of memory.

It should be understood that the above memory is an example but not a limiting description. For example, the memory in the embodiments of the present disclosure may also be a SRAM, a DRAM, a SDRAM, a DDR SDRAM, an ESDRAM, a SLDRAM, or a DR RAM. That is, the memory in the embodiments of the present disclosure is intended to include, but not limited to, these and any other suitable types of memory.

Some embodiments of the present disclosure also provide a computer-readable storage medium configured to store a computer program.

In some embodiments, the computer-readable storage medium may be applied in the network device in the embodiment of the present disclosure, and the computer program enables the computer to perform the corresponding operations implemented by the network device in the all methods in the embodiments of the present disclosure. For simplicity, the corresponding operations are not repeat here.

In some embodiments, the computer-readable storage medium may be applied in the relay terminal/remote terminal in the embodiments of the present disclosure, and the computer program enables the computer to perform the corresponding operations implemented by the relay terminal/remote terminal in the all methods in the embodiments of the present disclosure. For simplicity, the corresponding operations are not repeat here.

Some embodiments of the present disclosure also provide a computer program product including a computer program instruction.

In some embodiments, the computer program product may be applied for the network device in the embodiment of the present disclosure, and the computer program instruction enables the computer to perform the corresponding operations implemented by the network device in all methods in the embodiment of the present disclosure. For simplicity, the corresponding operations are not repeat here.

In some embodiments, the computer program product may be applied for the relay terminal/remote terminal in the embodiment of the present disclosure, and the computer program instruction enables the computer to perform the corresponding operations implemented by the relay terminal/remote terminal in all methods in the embodiment of the present disclosure. For simplicity, the corresponding operations are not repeat here.

Some embodiments of the present disclosure also provide a computer program.

In some embodiments, the computer program may be applied for the network device in the embodiment of the present disclosure. When the computer program runs on a computer, it enables the computer to perform the corresponding operations implemented by the network device in all method in the embodiments of the present disclosure. For simplicity, the corresponding operations are not repeat here.

In some embodiments, the computer program may be applied for the relay terminal/remote terminal in the embodiment of the present disclosure. When the computer program runs on a computer, it enables the computer to perform the corresponding operations implemented by the relay terminal/remote terminal in all method in the embodiments of the present disclosure. For simplicity, the corresponding operations are not repeat here.

Those skilled in the art may realize that the units and algorithm operations of each example described in combination with some embodiments described herein may be implemented by an electronic hardware, or a combination of a computer software and an electronic hardware. Whether these functions are implemented in a hardware or a software depends on a specific application and design constraints of the technical solutions. A professional and technical personnel may use different methods for each specific application to implement the described functions, but such implementation should not be considered beyond the scope of the present disclosure.

Those skilled in the art may clearly understand that for the convenience and conciseness of the description, the specific working process of the systems, apparatuses and units described above may refer to the corresponding operations in the above method embodiments, and are not repeated here.

In several embodiments provided herein, it should be understood that the disclosed systems, apparatuses, and methods may be implemented in other ways. For example, the device embodiments described above are merely illustrative. For example, the division of the above units is only a logical function division. In actual implementation, there may be another division manner. For example, multiple units or components may be combined or integrated into another system, or some features can be ignored or not executed. In addition, the mutual coupling or direct coupling or communication connection shown or discussed may be an indirect coupling or communication connection through some interfaces, devices or units, and may be electrical or in other forms.

The units described above as separate components may or may not be physically separated, and the components illustrated as units may or may not be physical units. The units may be located in one place, or may be distributed to multiple network units. Some or all of the units may be selected according to actual needs to achieve the purpose of a solution of the embodiments.

In addition, each functional unit in each embodiment of the present disclosure may be integrated into one processing unit, or each unit may exist physically separately. Optionally, two or more units may also be integrated into one unit.

The above-described integrated unit may be stored in a computer-readable memory if the integrated unit is implemented in the form of a software functional module and sold or used as a standalone product. Based on such understanding, the technical solution of the present disclosure, in essence or the contribution to the prior art, or all or part of the technical solution may be embodied in the form of a software product. The software product may be stored in a memory. The software product may include a number of instructions causing a computer device (the computer device may be a personal computer, a server or a network device, and the like) to perform all or parts of the operations of the above-described methods of various embodiments of the present disclosure. The foregoing memory may include various media which are able to store program codes. The media may include a U disk, a Read-Only Memory (ROM), a Random Access Memory (RAM), a removable hard disk, a magnetic disk, an optical disk, and the like.

The above description is only some embodiments of the present disclosure, but the protection scope of the present disclosure is not limited to this. Changes or replacements that are easily thought of by those skilled in the art should be covered in the protection scope of the present disclosure. Therefore, the protection scope of the present disclosure shall be subject to the protection scope of the claims.

## Claims

1. A paging message monitoring method, comprising:
monitoring, by a relay terminal, a paging message on at least one of a plurality of resources; wherein the plurality of resources comprise resources configured by a network device for terminal types with a plurality of bandwidth capabilities to monitor paging messages.

2. The method as claimed in claim 1, wherein the plurality of resources are configured in a first initial downlink bandwidth part (BWP).

3. The method as claimed in claim 1 or 2, wherein the plurality of resources are configured in a second initial downlink bandwidth part (BWP); the second initial downlink BWP is an initial downlink BWP configured by the network device for a terminal type with a second bandwidth capability; the second bandwidth capability represents a bandwidth capability of the relay terminal.

4. The method as claimed in claim 1, wherein the plurality of resources are configured in a plurality of initial downlink bandwidth parts (BWPs), and each of the plurality of resources corresponds to a respective initial downlink BWP of the plurality of initial downlink BWPs.

5. The method as claimed in any one of claims 1-4, wherein the monitoring, by a relay terminal, a paging message on at least one of a plurality of resources, comprises:
monitoring, by the relay terminal, a paging message on a first resource of the plurality of resources;
wherein the first resource is a resource configured by the network device for a terminal type with a first bandwidth capability; the first bandwidth capability is a bandwidth capability less than or equal to a second bandwidth capability of a plurality of bandwidth capabilities; the second bandwidth capability represents a bandwidth capability of the relay terminal.

6. The method as claimed in any one of claims 1-5, wherein the monitoring, by a relay terminal, a paging message on at least one of a plurality of resources, comprises:
monitoring, by the relay terminal, a paging message on a second resource and/or a paging message on a third resource of the plurality of resources;
wherein the second resource is a resource configured by the network device for a terminal type with a second bandwidth capability; the second bandwidth capability represents a bandwidth capability of the relay terminal; the third resource is a resource configured by the network device for a terminal type with a third bandwidth capability; the third bandwidth capability represents a bandwidth capability of a remote terminal.

7. The method as claimed in claim 6, wherein the monitoring, by the relay terminal, a paging message on a second resource and/or a paging message on a third resource of the plurality of resources, comprises:
monitoring, by the relay terminal, the paging message on the second resource and the paging message on the third resource, in response to the second bandwidth capability being greater than or equal to the third bandwidth capability;
monitoring, by the relay terminal, the paging message on the second resource, in response to the second bandwidth capability being less than the third bandwidth capability.

8. The method as claimed in claim 6 or 7, before monitoring, by the relay terminal, a paging message on a second resource and/or a paging message on a third resource of the plurality of resources, further comprising:
receiving, by the relay terminal, auxiliary information transmitted by the remote terminal; wherein the auxiliary information is configured to indicate the third resource.

9. The method as claimed in claim 8, wherein the auxiliary information includes at least one of:
bandwidth capability information of the third bandwidth capability of the remote terminal;
the third resource configured by the network device for the terminal type with the third bandwidth capability; and
an initial downlink bandwidth part (BWP) configured by the network device for the terminal type of the third bandwidth capability.

10. The method as claimed in any one of claims 1-9, further comprising:
transmitting, by the relay terminal, a plurality pieces of indication information; wherein the plurality pieces of indication information are configured to indicate whether the relay terminal is capable of providing a relay service for the terminal types with the plurality of bandwidth capabilities; each piece of the plurality pieces of indication information corresponds to a terminal type with a respective bandwidth capability of the terminal types with a plurality of bandwidth capabilities.

11. The method as claimed in claim 10, wherein first indication information indicates that the relay terminal is capable of providing a relay service for a terminal type with a fourth bandwidth capability corresponding to the first indication information, in response to at least one of the following conditions being met:
the relay terminal being capable of monitoring a paging message on a fourth resource; the fourth resource being a resource configured by the network device for the terminal type with the fourth bandwidth capability; and
the network device having been configured the fourth resource for the terminal type with the fourth bandwidth capability, a second bandwidth capability of the relay terminal being greater than or equal to the fourth bandwidth capability;
wherein the first indication information is any one of the plurality pieces of indication information.

12. The method as claimed in claim 11, wherein the first indication information indicates that the relay terminal is incapable of providing the relay service for the terminal type with the fourth bandwidth capability corresponding to the first indication information, in response to any of the following conditions being met:
the network device having not been configured a resource to a monitor the paging message for the terminal type with the fourth bandwidth capability;
the relay terminal being incapable of monitoring the paging message on the fourth resource; the fourth resource being a resource configured by the network device for the terminal type with the fourth bandwidth capability; and
the second bandwidth capability of the relay terminal being less than the fourth bandwidth capability;
wherein the first indication information is any one of the plurality pieces of indication information.

13. The method as claimed in any one of claims 1-12, wherein the bandwidth capability represents a maximum bandwidth which a terminal is capable of supporting.

14. A paging message transmission method, comprising:
configuring, by a network device, a plurality of resources for terminal types with a plurality of bandwidth capabilities; wherein a terminal type with each of the plurality of bandwidth capabilities corresponds to a respective resource of the plurality of resources; and
transmitting, by the network device, paging messages on the plurality of resources.

15. The method as claimed in claim 14, wherein the configuring, by a network device, a plurality of resources for terminal types with a plurality of bandwidth capabilities, comprises:
transmitting, by the network device, first configuration information; wherein the first configuration information is configured to configure a first initial downlink bandwidth part (BWP), and is configured to configure the plurality of resources for the terminal types with a plurality of bandwidth capabilities in the first initial downlink BWP.

16. The method as claimed in claim 14, wherein the configuring, by a network device, a plurality of resources for terminal types with a plurality of bandwidth capabilities, comprises:
transmitting, by the network device, second configuration information; wherein the second configuration information is configured to configure a plurality of initial downlink bandwidth parts (BWPs), and each of the plurality of initial downlink BWPs corresponds to a terminal type with a respective bandwidth capability of the terminal types with the plurality of bandwidth capabilities; the second configuration information is also configured to configure the plurality of resources in a second initial downlink BWP of the plurality of initial downlink BWPs.

17. The method as claimed in claim 14, wherein the configuring, by a network device, a plurality of resources for terminal types with a plurality of bandwidth capabilities, comprises:
transmitting, by the network device, third configuration information; wherein the third configuration information is configured to configure a plurality of initial downlink bandwidth parts (BWPs), and configure a resource in each of the plurality of initial downlink BWPs, each of the plurality of initial downlink BWPs corresponds to a terminal type with a respective bandwidth capability of the terminal types with the plurality of bandwidth capabilities.

18. The method as claimed in any one of claims 14-17, wherein the bandwidth capability represents a maximum bandwidth which a terminal is capable of supporting.

19. A paging message receiving method, comprising:
receiving, by a remote terminal, a first paging message which a relay terminal transmits for the remote terminal; wherein the first paging message is received by the relay terminal on a third resource; the third resource is a resource configured by a network device for a terminal type with a third bandwidth capability; the third bandwidth capability represents a bandwidth capability of the remote terminal; the third bandwidth capability is less than or equal to a second bandwidth capability of the relay terminal.

20. The method as claimed in claim 19, before the receiving, by a remote terminal, a first paging message which a relay terminal transmits for the remote terminal, further comprising:
transmitting, by the remote terminal, auxiliary information to the relay terminal; wherein the auxiliary information is configured to indicate the third resource.

21. The method as claimed in claim 20, wherein the auxiliary information comprises at least one of:
bandwidth capability information of the third bandwidth capability of the remote terminal;
the third resource configured by the network device for the terminal type with the third bandwidth capability; and
an initial downlink bandwidth part (BWP) configured by the network device for the terminal type with the third bandwidth capability.

22. The method as claimed in any one of claims 19-21, before the receiving, by a remote terminal, a first paging message which a relay terminal transmits for the remote terminal, further comprising:
receiving, by the remote terminal, indication information; wherein the indication information is configured to indicate whether the relay terminal is capable of providing a relay service for the remote terminal.

23. The method as claimed in any one of claims 19-22, wherein the bandwidth capability represents a maximum bandwidth which a terminal is capable of supporting.

24. A paging message monitoring apparatus, comprising:
a first receiving unit, configured to monitor a paging message on at least one of a plurality of resources; wherein the plurality of resources comprise resources configured by a network device for terminal types with a plurality of bandwidth capabilities to monitor the paging message.

25. A paging messages transmitting apparatus, comprising:
a second transmission unit, configured to configure a plurality of resources for terminal types with a plurality of bandwidth capabilities, and configured to transmit paging messages on the plurality of resources; wherein a terminal type with each of the plurality of bandwidth capabilities corresponds to a respective resource of the plurality of resources.

26. A paging message receiving apparatus, comprising:
a third receiving unit, configured to receive a first paging message a relay terminal transmits for a remote terminal; wherein the first paging message is received by the relay terminal on a third resource; the third resource is a resource configured by a network device for a terminal type with a third bandwidth capability; the third bandwidth capability represents a bandwidth capability of the remote terminal; the third bandwidth capability is less than or equal to a second bandwidth capability of the relay terminal.

27. A terminal device, comprising a processor and a memory; wherein the memory is configured to store a computer program, and the processor is configured to call and run the computer program stored in the memory and perform the method as claimed in any one of claims 1-13 or claims 19-23.

28. A network device, comprising a processor and a memory; wherein the memory is configured to store a computer program, and the processor is configured to call and run the computer program stored in the memory and perform the method as claimed in any one of claims 14-18.

29. A chip, comprising a processor; wherein the processor is configured to call and run a computer program from a memory, and enable a device comprising the chip to perform the method as claimed in any one of claims 1-13 or claims 19-23.

30. A chip, comprising a processor; wherein the processor is configured to call and run a computer program from a memory, and enable a device comprising the chip to perform the method as claimed in any one of claims 14-18.

31. A computer-readable storage medium, configured to store a computer program; wherein the computer program enables a computer to perform the method as claimed in any one of claims 1-13 or claims 19-23.

32. A computer-readable storage medium, configured to store a computer program; wherein the computer program enables a computer to perform the method as claimed in any one of claims 14-18.

33. A computer program product, comprising computer program instruction; wherein the computer program instruction enable a computer to perform the method as claimed in any one of claims 1-13 or claims 19-23.

34. A computer program product, comprising computer program instruction; wherein the computer program instruction enable a computer to perform the method as claimed in any one of claims 14-18.

35. A computer program, enabling a computer to perform the method of any one of claims 1-13 or claims 19-23.

36. A computer program, enabling a computer to perform the method of any one of claims 14-18.
